# EUROPÄISCHE PATENTSCHRIFT

(11) **EP 3 816 742 B1**
(45) Veröffentlichungstag und Bekanntmachung des Hinweises auf die Patenterteilung: **12.07.2023**
(21) Anmeldenummer: 19206750.2
(22) Anmeldetag: 01.11.2019
(51) Int. Cl.: G05B 19/042

(54) **ELEKTRISCHE ANLAGE MIT AKUSTISCHER ÜBERWACHUNGSEINRICHTUNG SOWIE ENTSPRECHENDES VERFAHREN**
ELECTRICAL INSTALLATION WITH ACOUSTIC MONITORING DEVICE AND CORRESPONDING METHOD
INSTALLATION ÉLECTRIQUE POURVUE DE DISPOSITIF DE SURVEILLANCE ACOUSTIQUE ET PROCÉDÉ CORRESPONDANT

(43) Veröffentlichungstag der Anmeldung: 05.05.2021
(73) Patentinhaber: Siemens Energy Global GmbH & Co. KG, 81739 München (DE)
(72) Erfinder: Armschat, Christoph, 91058 Erlangen (DE); Alt, Bastian, 90587 Veitsbronn (DE); Schettler, Frank, 91058 Erlangen (DE); Gambach, Herbert, 91080 Uttenreuth (DE)

(56) Entgegenhaltungen:
- EP-A1- 3 508 833
- WO-A1-2017/167656
- WO-A2-2009/037077

## Beschreibung

Die Erfindung bezieht sich auf elektrische Anlagen mit einer oder mehreren elektrischen Anlagenkomponenten und einer Überwachungseinrichtung zur Überwachung der elektrischen Anlage. Eine Diagnosevorrichtung für eine elektrische Anlage ist aus der EP 3 508 833 A1 bekannt. Die bekannte Diagnosevorrichtung nutzt Sensordaten der Temperatur, des Drucks, der Spannung, des Stromes und der Vibrationen.

Eine Sensoreinrichtung zum Erkennen von Geräuschen ist in der WO 2009/037077 A2 offenbart.

Die WO 2017/167656 A1 offenbart ein Verfahren zur Fernüberwachung einer industriellen Anlage.

Der Erfindung liegt die Aufgabe zugrunde, eine elektrische Anlage mit einer Überwachungseinrichtung anzugeben, die sich mit geringem Aufwand herstellen und installieren lässt, aber dennoch sehr zuverlässige Überwachungsergebnisse hinsichtlich einer möglichen Fehlfunktion bzw. Fehlverhaltens der elektrischen Anlage liefern kann.

Diese Aufgabe wird erfindungsgemäß mit einer Anlage mit den Merkmalen gemäß Patentanspruch 1 gelöst. Vorteilhafte Ausgestaltungen der erfindungsgemäßen Anlage sind in Unteransprüchen angegeben.

Ein wesentlicher Vorteil der erfindungsgemäßen elektrischen Anlage besteht darin, dass sich durch die erfindungsgemäß vorgesehene akustische Überwachung der elektrischen Anlage bzw. derer elektrischer Anlagenkomponenten sehr einfach, aber dennoch sehr zuverlässig, Fehler erfassen lassen und ggf. ein Warnsignal, das ein Fehlverhalten anzeigt, erzeugen lässt.

Die Auswerteinrichtung steht erfindungsgemäß mit zumindest einem elektrischen Anlagensensor der Anlage in Verbindung, der ein den jeweiligen Betriebszustand einer oder mehrerer der Anlagenkomponenten beschreibendes, anlagenbezogenes Betriebszustandssignal erzeugt.

Die Auswerteinrichtung ist erfindungsgemäß dazu ausgestaltet, das akustische Messsignal unter Heranziehung des Betriebszustandssignals auszuwerten und das Warnsignal zu erzeugen, wenn das akustische Messsignal für den durch das anlagenbezogene Betriebszustandssignal beschriebenen Betriebszustand auf ein Fehlverhalten der Anlage hinweist.

Der Anlagensensor ist erfindungsgemäß ein Stromsensor, ein Spannungssensor oder ein Temperatursensor, der als Betriebszustandssignal den Stromfluss durch die oder zumindest eine der Anlagenkomponenten, die an den oder an zumindest einer der Anlagenkomponenten anliegende elektrische Spannung oder die Temperatur der oder zumindest einer der Anlagenkomponenten angibt.

Erfindungsgemäß weist die Anlage eine Mehrzahl an elektrischen Anlagenkomponenten auf, denen jeweils ein elektrischer Anlagensensor zugeordnet ist, wobei die Anlagensensoren jeweils ein den jeweiligen Betriebszustand der ihnen zugeordneten Anlagenkomponente(n) beschreibendes Betriebszustandssignal erzeugen.

Die Auswerteinrichtung steht mit den Anlagensensoren in Verbindung und ist dazu ausgestaltet, das akustische Messsignal unter Heranziehung der zur Verfügung stehenden Betriebszustandssignale auszuwerten und das Warnsignal zu erzeugen, wenn das akustische Messsignal für die durch die Betriebszustandssignale beschriebenen Betriebszustände der Anlagenkomponenten auf ein Fehlverhalten einer oder mehrerer der Anlagenkomponenten hinweist.

Mit Blick auf eine besonders ausfallsichere Überwachung weist die Überwachungseinrichtung zwei oder mehr akustische Sensoren zur Geräuscherfassung der Geräusche der elektrischen Anlage auf und die Auswerteinrichtung ist dazu ausgestaltet, die akustischen Messsignale der zwei oder mehr akustischen Sensoren auszuwerten und ein Warnsignal zu erzeugen, wenn die akustischen Messsignale insgesamt oder ein oder mehrere der Messsignale auf ein Fehlverhalten der Anlage hinweisen.

Mit Blick auf eine richtungsselektive Überwachung ist die Auswerteinrichtung dazu ausgestaltet, die Phasenlage und/oder Laufzeit zumindest zweier der akustischen Messsignale hinsichtlich einer Phasenlagen- und/oder Laufzeitdifferenz unter Bildung einer Richtungsinformation auszuwerten und die akustischen Messsignale richtungsselektiv auszuwerten.

Die Auswerteinrichtung ist vorzugsweise dazu ausgebildet, das oder die akustischen Messsignale hinsichtlich der jeweiligen Amplitude auszuwerten und das Warnsignal zu erzeugen, wenn die Amplitude oder Amplituden auf ein Fehlverhalten der Anlage hinweisen.

Alternativ oder zusätzlich kann die Auswerteinrichtung in vorteilhafter Weise das oder die akustischen Messsignale hinsichtlich des Frequenzspektrums auswerten und das Warnsignal erzeugen, wenn die Frequenzspektren auf ein Fehlverhalten der Anlage hinweisen.

Besonders schnell und zuverlässig lässt sich die Geräuschauswertung durchführen, indem die Auswerteinrichtung das oder die akustischen Messsignale mit abgespeicherten Signalmustern vergleicht und das Warnsignal erzeugt, wenn aktuelle Messsignale von abgespeicherten Signalmustern über ein vorgegebenes Maß abweichen.

Vorteilhaft ist es, wenn die Auswerteinrichtung dazu ausgebildet ist, anhand von akustischen Messsignalen im fehlerfreien Anlagenzustand und/oder im fehlerbehafteten Anlagenzustand durch Anlernen künstliche Intelligenz zu erwerben, anhand derer sie das Warnsignal erzeugen kann, wenn aktuelle Messsignale über ein vorgegebenes Maß von Messsignalen der fehlerfreien Anlage abweichen oder in einem vorgegebenen Maß mit Messsignalen der fehlerbehafteten Anlage übereinstimmen. Erfindungsgemäß umfasst die Überwachungseinrichtung einen oder mehrere nichtakustische Sensoren, insbesondere Schwingungssensoren wie beispielsweise Laservibrometer, UV- und IR-Licht-Sensoren, Wasserstandsmeldesensoren oder Drucksensoren aufweist, die nichtakustische Messsignale erzeugen.

Die Auswerteinrichtung ist dazu ausgebildet, anhand des oder der akustischen und des oder der nichtakustischen Messsignale das Warnsignal zu erzeugen, wenn diese in Kombination auf einen Fehler der Anlage hinweisen.

Die Erfindung bezieht sich darüber hinaus auf ein Verfahren zum Überwachen einer elektrischen Anlage, gemäß Anspruch 6 Bezüglich der Vorteile des erfindungsgemäßen Verfahrens sowie bezüglich vorteilhafter Ausgestaltungen des erfindungsgemäßen Verfahrens sei auf die obigen Ausführungen im Zusammenhang mit der erfindungsgemäßen elektrischen Anlage sowie deren vorteilhafte Ausgestaltungen verwiesen.

Die Erfindung wird nachfolgend anhand von Ausführungsbeispielen näher erläutert; dabei zeigen beispielhaft
- Figur 1: ein Ausführungsbeispiel für eine elektrische Anlage mit Überwachungseinrichtung, die akustische Messsignale zur Anlagenüberwachung auswertet,
- Figur 2: ein Ausführungsbeispiel für eine elektrische Anlage mit Überwachungseinrichtung, die akustische Messsignale und Betriebszustandssignale auswertet,
- Figur 3: ein drittes Ausführungsbeispiel für eine elektrische Anlage mit Überwachungseinrichtung, die akustische und nichtakustische Messsignale und Betriebszustandssignale auswertet.

In den Figuren werden der Übersicht halber für identische oder vergleichbare Komponenten stets dieselben Bezugszeichen verwendet.

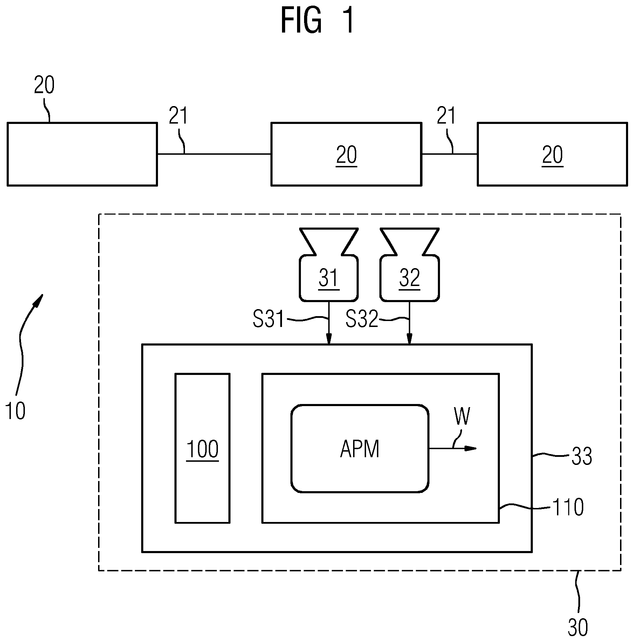

Die Figur 1 zeigt ein nicht beanspruchtes Beispiel für eine elektrische Anlage 10, die mit einer Vielzahl an elektrischen Anlagenkomponenten 20 und einer Überwachungseinrichtung 30 zur Überwachung der elektrischen Anlage 10 ausgestattet ist.

Bei den elektrischen Anlagenkomponenten 20 kann es sich beispielsweise um Transformatoren, elektrische Umrichter oder Schaltkomponenten handeln, die über nur schematisch in der Figur 1 eingezeichnete elektrische Verbindungsleitungen 21 miteinander in Verbindung stehen können.

Die Überwachungseinrichtung 30 weist bei dem Beispiel gemäß Figur 1 zwei akustische Sensoren 31 und 32 auf, die die Geräusche der elektrischen Anlage 10 unter Bildung akustischer Messsignale S31 und S32 erfassen. Die akustischen Messsignale S31 und S32 werden zu einer Auswerteinrichtung 33 der Überwachungseinrichtung 30 übermittelt, die die akustischen Messsignale S31 und S32 auswertet und ein Warnsignal W erzeugt, wenn die akustischen Messsignale S31 und S32 auf ein Fehlverhalten der oder zumindest einer der Anlagenkomponenten 20 hinweist.

Die Auswerteinrichtung 33 wird vorzugsweise durch eine Recheneinrichtung 100 und einen Speicher 110 gebildet. In dem Speicher 110 ist ein Auswertprogrammmodul APM abgespeichert, das bei Ausführung durch die Recheneinrichtung 100 die Arbeitsweise der Auswerteinrichtung 33 festlegt und in der Lage ist, auf der Basis der eingangsseitig anliegenden Messsignale S31 und S32 das Warnsignal W im Falle einer Fehlfunktion der Anlage 10 zu erzeugen.

Da bei dem Beispiel gemäß Figur 1 die Überwachungseinrichtung 30 zwei akustische Sensoren 31 und 32 aufweist, die beabstandet zueinander angeordnet sind, ist es der Auswerteinrichtung 33 möglich, die Phasenlage und/oder Laufzeit der eingangsseitig anliegenden akustischen Messsignale S31 und S32 auszuwerten und diese richtungsselektiv zu interpretieren. Mit anderen Worten kann also eine richtungsselektive Auswertung der Geräusche der elektrischen Anlage 10 erfolgen und das Warnsignal W erzeugt werden, wenn ein ungewöhnliches Geräuschmuster aus bestimmten Richtungen festgestellt wird.

Darüber hinaus ist es vorteilhaft, wenn das Auswertprogrammmodul APM die akustischen Messsignale S31 und S32 hinsichtlich der jeweiligen Amplitude und des jeweiligen Frequenzspektrums auswertet und das Warnsignal W erzeugt, wenn die Amplituden und/oder die Frequenzspektren auf ein Fehlverhalten der Anlage hinweisen.

Das Auswertprogrammmodul APM wird die akustischen Messsignale S31 und S32 vorzugsweise mit abgespeicherten Signalmustern vergleichen und das Warnsignal W erzeugen, wenn aktuelle Messsignale von abgespeicherten Signalmustern für eine fehlerfreie Anlage über ein vorgegebenes Maß abweichen und/oder mit abgespeicherten Signalmustern für eine fehlerbehaftete Anlage in einem vorgegebenen Maß übereinstimmen.

Der Vergleich erfolgt vorzugsweise auf der Basis künstlicher Intelligenz, die das Auswertprogrammmodul APM beispielsweise anhand von früheren akustischen Messsignalen im fehlerfreien Anlagenzustand und/oder früheren akustischen Messsignalen im fehlerbehafteten Anlagenzustand erworben hat oder von einem Anlernprogramm dem Auswertprogrammmodul APM antrainiert worden ist.

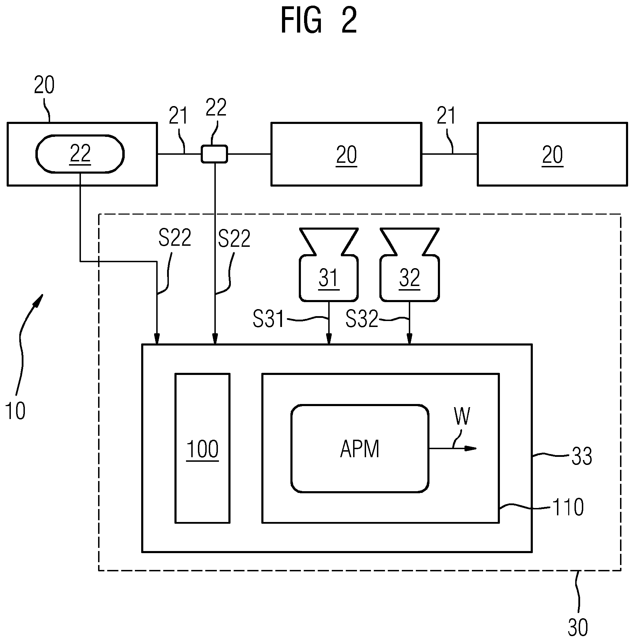

Die Figur 2 zeigt ein Ausführungsbeispiel der Erfindung für eine elektrische Anlage 10, die mit einer Vielzahl an elektrischen Anlagenkomponenten 20 und einer Überwachungseinrichtung 30 zur Überwachung der elektrischen Anlage 10 ausgestattet ist. Im Unterschied zu dem Ausführungsbeispiel gemäß Figur 1 steht die Überwachungseinrichtung 30 bzw. deren Auswerteinrichtung 33 zusätzlich mit Anlagensensoren 22 in Verbindung, die in den Anlagenkomponenten 20 angeordnet oder in oder an die elektrischen Leitungen 21 zwischen den Anlagenkomponenten 20 geschaltet sind. Die Anlagensensoren 22 erzeugen jeweils ein den jeweiligen Betriebszustand der ihnen zugeordneten Anlagenkomponente beschreibendes Betriebszustandssignal S22.

Der Betriebszustand kann beispielsweise durch ein Betriebszustandssignal in Form eines Stromflusssignals, das den Stromfluss in einer Anlagenkomponente 20 oder einer Leitung 21 angibt, ein Betriebszustandssignal in Form eines Leistungssignals, das die elektrische Spannung in einer Anlagenkomponente 20 angibt, oder ein Betriebszustandssignal in Form eines Temperatursignals, das die Temperatur einer Anlagenkomponente 20 anzeigt, beschrieben werden.

Die Überwachungseinrichtung 30 bzw. deren Auswerteinrichtung 33 hat somit die Möglichkeit, anhand der Betriebszustandssignale S22 der Anlagensensoren 22 auf den jeweiligen Betriebszustand der elektrischen Anlage 10 bzw. deren Anlagenkomponenten 20 zu schließen und das Warnsignal W sowohl unter Heranziehung der akustischen Messsignale S31 und S32 der akustischen Sensoren 31 und 32 als auch der anlagenbezogenen Betriebszustandssignale S22 der Anlagensensoren 22 zu bilden.

Zeigen die anlagenbezogenen Betriebszustandssignale S22 beispielsweise einen Normalbetrieb der Anlagenkomponenten 20, so kann die Auswerteinrichtung 33 das mittels der akustischen Sensoren 31 und 32 erfasste Geräuschmuster für einen Normalbetrieb der elektrischen Anlage 10 auswerten; zeigen die anlagenbezogenen Betriebszustandssignale S22 der Anlagensensoren 22 hingegen einen besonders leistungsintensiven Betrieb (oder einen Betrieb mit grenzwertigen elektrischen, thermischen oder mechanischen Betriebsparametern) der Anlagenkomponenten 20 an, so kann die Überwachungseinrichtung 30 das Warnsignal W beispielsweise nur dann erzeugen, wenn die akustischen Messsignale S31 und S32 eben für einen solchen leistungsintensiven Anlagenbetrieb besonders ungewöhnliche Geräusche anzeigen.

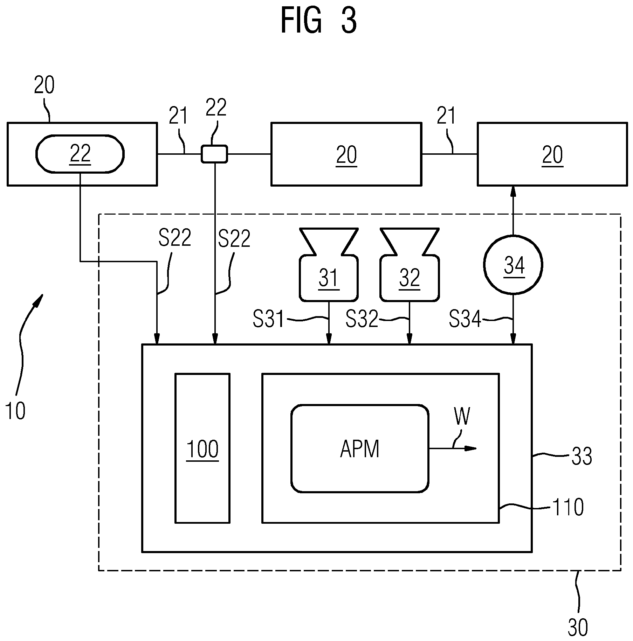

Die Figur 3 zeigt ein weiteres Ausführungsbeispiel für eine elektrische Anlage 10, die Anlagenkomponenten 20 und eine Überwachungseinrichtung 30 aufweist.

Bei dem Ausführungsbeispiel gemäß Figur 3 ist die Überwachungseinrichtung 30 außerdem mit einem nichtakustischen Sensor 34, vorzugsweise in Form eines Laser-Vibrometers, ausgestattet, der ein nichtakustisches Messsignal S34, vorzugsweise eine mechanische Schwingung einer oder mehrerer der Anlagenkomponenten 20 beschreibendes Messsignal, erzeugt.

Die Auswerteinrichtung 33 erzeugt das Warnsignal W auf der Basis aller ihr vorliegenden akustischen und nichtakustischen Messsignale S31, S32 und S34 sowie der anlagenbezogenen Betriebszustandssignale S22, wenn diese in Kombination oder einzeln betrachtet auf einen Fehler der Anlage hinweisen. Im Übrigen gelten die obigen Ausführungen im Zusammenhang mit den Figuren 1 und 2 entsprechend.

Zusammengefasst können elektrische Anlagen oder Anlagenteile mittels der oben beispielhaft beschriebenen Ergänzung einer redundanten akustischen Überwachung zuverlässiger und umfangreicher überwacht und geschützt werden, als dies ohne die akustische Überwachung der Fall wäre. Dies gilt insbesondere für eine Hochspannungsanlage mit Transformatoren, Konvertern, Drosseln und/oder Kondensatorbänken. Speziell die Konverter-Bypass-Schalter-Versager-Erkennung kann mit einer akustischen Überwachung sinnvoll ergänzt werden.

Die akustische Überwachung von elektrischen Anlagen und Komponenten kann folgende Merkmale aufweisen:
- Geräusch-Amplitudenerkennung
- Erkennung akustischer Muster
- Richtungserkennung/Ortung der Geräuschquelle
- Datenbank, Speicherzeiten von Besonderheiten und Referenzabbildern
- Kombination mit elektrischer Korona- und Teilentladungs-Erkennung
- Vergleich von akustischen Messungen mit Messungen eines Laser-Vibrometers
- Kombination mit andersartigen Schutzkonzepten

### Hierzu im Einzelnen:

### Geräusch-Amplitudenerkennung:

Die Amplitude des aufgezeichneten Geräuschs kann über einen langen Zeitraum erfasst, kategorisiert und gemäß den verschiedenen typischen Anlagen-/Komponentenbetriebszuständen in einer Datenbank abgespeichert werden. Entsprechend von stromabhängigen Kräften im stromdurchflossenen Gerät werden typische Geräuschamplituden emittiert, die mit dem Gehalt von Harmonischen in Strom und Spannung variieren.

Anomalien in der Geräuschamplitude können erfasst und je nach Grad der Anomalie in eine Leitzentrale gemeldet werden, in der alle geräuschrelevanten Betriebsparameter erfasst werden.

### Erkennung akustischer Muster:

Das akustische Muster bzw. der akustische Fingerabdruck einer Komponente wird bestimmt durch den zeitlichen Ablauf eines akustischen Ereignisses (Abfolge von Peaks) und den variierenden Frequenzgehalt in akustischen Ereignissen. Akustische Muster können eine Veränderung innerhalb einer elektrischen Komponente indizieren, die, frühzeitig erkannt, eine Außerbetriebnahme dieser Komponente noch vor dem Ausfall der Komponente ermöglichen und somit Folgeschäden und verlängerte Ausfallzeiten verhindern kann.

### Richtungserkennung/Ortung der Geräuschquelle:

Der zeitliche Versatz von akustischen Signalen - insbesondere von Peaks in akustischen Signalen - die an verschiedenen Orten von zeitlich synchronisierten Mikrofonen erfasst werden, kann zur Berechnung des Ortes des Ereignisses verwendet werden: Beispielsweise kann eine erhöhte Laufzeit eines Signals der Indikator für die Entfernung des Ereignisses vom jeweiligen Mikrofon sein. Bei Verwendung von mehreren Mikrofonen wird mittels Signal-Laufzeitanalyse vorzugsweise der Ort des akustischen Ereignisses berechnet.

### Kombination mit elektrischer Korona- und Teilentladungs-Erkennung, z. B. in PLC Kondensatoren und RCVD Kopplern:

Akustische Muster können - bei niedrigem Hintergrund-Geräuschpegel - Indikationen für Teilentladungen und Koronaentladungen liefern. Da die akustischen Signale in der Regel entsprechend der Stärke der Teilentladungen nur ein schwaches akustisches Signal liefern, kann der Vergleich der Entladungspeaks im Geräuschspektrum mit Spannungspeaks in PLC Koppelkondensatoren (Power Line Carrier coupling capacitors) und resistiv/kapazitiv arbeitenden Spannungsteilern (RCVD) sinnvoll sein. Koinzidenz von Peaks in Geräusch und Spannung kann in vorteilhafter Weise ein Indikator für Teilentladungen bzw. Koronaentladungen in der Anlage sein.

### Statistisches Auswerteverfahren:

Bei geringfügigen Ereignisse, die für sich allein nicht eindeutig interpretierbar sind, wird vorzugsweise wie folgt vorgegangen:
- Statistische Bewertung
- Räumlich Eingrenzung, d. h. Aufteilung eines überwachten Raums in kubische oder überlappende kugelige (sphärische) Untereinheiten, beispielsweise 4*3*3 = 36 Untereinheiten
- Bewertung der Häufigkeit des Auftretens bezogen auf die räumliche Zuordnung
- Automatische Sortierung der gefunden Muster, z. B.: in Teilentladung, Lichtbogengeräusch an schlechten Kontaktübergängen in der Stromschiene
- Verknüpfen der Aufzeichnungen mit Aufzeichnungen der anderen Sensortechnologien (UV/IR, Kühlwasserdruck, Klimaanlage, etc.)

### Datenbank, Speicherzeiten von Besonderheiten:

Audio-Clips von Besonderheiten, speziell getriggert, werden vorzugsweise abgespeichert. Eine bleibend abgespeicherte Aufzeichnung wird vorzugsweise stets dann getriggert, wenn die für den aktuell gefahrenen Betriebsstrom gemessene Geräuschamplitude nicht mehr typisch ist, oder wenn in der Fourier Analyse unerwartete Frequenzen auftreten. Im Falle von auftretenden Besonderheiten, z. B. bei Ansprechen nur eines einzelnen weiteren Schutzgeräts, z. B. eines IR, UV Melders oder auch bei Ansprechen nur eines einzelnen Mikrofons, werden die Aufzeichnungen über das besondere Ereignis gesichert und archiviert.

### Stetige Folge von Audio Clips, temporär gespeichert:

Darüber hinaus wird vorzugsweise ein stetiger Mitschnitt aller Geräusche (z. B. eine Abfolge direkt aneinander anschließender Audio Clips im komprimierten MP3 Format) als ein Schieberegister über z. B. 28 Tage eingerichtet: Wenn keine Besonderheiten im Betrieb der Anlage erkannt werden, dann werden die Aufzeichnungen aller Audio-Kanäle vorzugsweise nach einer Speicherzeit von z. B. 28 Tagen - bis auf wenige kleine exemplarische Zeitscheiben - automatisch gelöscht.

Auf diese Weise entsteht eine Erfahrungsdatenbank, die es erlaubt, bei Wartungen die relevanten/auffälligen Anlagenteile mit besonderer Aufmerksamkeit zu inspizieren, die Datenbasis zur Erkennung von verschiedenen Fehlertypen wird mit Aufzeichnungen angereichert, die später das automatisierte Erkennen von Besonderheiten und sich entwickelnden Fehlern ermöglicht.

### Selbstlernende Mustererkennung für den fehlerfreien Betrieb:

Bei der Inbetriebnahme der Anlage werden die Fingerabdrücke der Geräusche vorzugsweise bei normalem Betrieb automatisch gelernt. Dabei werden Geräusche und elektrische Betriebsdaten korreliert, zum Beispiel Betriebsströme und Sonderereignisse des fehlerfreien Betriebs (z. B. auch beim Konverterblock).

### Vergleich von akustischen Messungen mit Messungen eines Laser Vibrometers

Auf den geräuschemittierenden Komponenten einer Anlage (siehe oben) werden vorzugsweise Reflexionspunkte für den Laserstrahl eines Laservibrometers aufgebracht, damit Vibrationsmessungen aus der Ferne durchgeführt werden können. Im Falle eines geeigneten Anstrichs mit ausreichenden Reflexionseigenschaften wird vorzugsweise lediglich ein Messpunkt optisch markiert (z. B. mittels eines gut sichtbaren Kreises auf dem Anstrich). Gegebenenfalls wird zu einem Standpunkt eines Laservibrometers ein angewinkelter Messpunkt aufgebracht, so dass der Laserstrahl senkrecht auf den Messpunkt auftrifft. Mittels eines Laservibrometers wird nun aus sicherer Entfernung (sicherer Standpunkt für Personal) dieser Punkt bei Inbetriebsetzung im Betrieb der Anlage angepeilt und die gemessenen Oberflächen-Schwingungen, die eng mit den abgestrahlten akustischen Geräuschen korrelieren, werden aufgezeichnet und zeitlich synchronisiert mit den akustischen Geräuschen zusammengeführt. Diese Messungen werden unter den einzelnen Komponenten verglichen und abgespeichert. Später, wenn Besonderheiten auftreten oder wenn alle Komponenten auch nur routinemäßig überprüft werden sollen, kann dies wieder bei den unter Spannung stehenden Komponenten während des Betriebs durchgeführt werden.

Das Laser-Vibrometer steht in der elektrischen Anlage vorzugsweise in einem Bereich an Aufstellungspunkten, die gute Sicht auf die Messpunkte an den Komponenten bieten. Die Standpunkte für das Laser-Vibrometer sind vorzugsweise frei von Vibrationen und haben sicheren, festen Stand.

### Spezialfall Kondensatorbank:

Jede Kondensatoreinheit, insbesondere die verdächtigen Einheiten, kann mit dem Laservibrometer angepeilt und schwingungstechnisch gemessen werden. Hierzu wird ein Messpunkt auf der Stirnfläche einer Kondensatoreinheit zwischen den Durchführungen angepeilt. Auffällige Einheiten werden durch den Vergleich zu anderen Einheiten in der Bank identifiziert und gegebenenfalls ausgetauscht.

### Spezialfall Filterdrosseln:

Filterdrosseln in den verschiedenen Phasen eines Filters, Drosseln in FACTS Anlagen und andere Drosseln besitzen bei gleicher Funktion sehr ähnliche Schwingungs-Charakteristik. Der Oberflächen-Schwingungsvergleich der Geräte in den drei Phasen erlaubt bei gelegentlicher Messung - insbesondere über längere Zeiträume verteilt - die Erkennung von Änderungen in der mechanischen Festigkeit der Wicklungen und somit eine Aussage über den Zustand der Drossel vor einem Ausfall derselben.

### Spezialfall Transformatoren:

Der Tank eines Transformators spiegelt die magnetischen Kräfte und durch diese verursachte magneto-restriktive Kräfte im Eisenkern und den Wicklungen wider. In Kombination mit dem während der Schwingungsanalyse gemessenen Strom werden typische Schwingungsmuster aufgezeichnet und gelegentlich über längere Zeiträume erfasst. Abweichungen und Tendenzen werden erkannt und - insbesondere im Vergleich von Einphasentrafos - analysiert. Auch die Lüfter können einzeln verglichen werden, drohende Lagerschäden können im Frequenzspektrum des Lüfters noch vor Ausfall des Lagers und des Lüfters erkannt werden: Entstehende Lagerschäden zeigen charakteristische Vibrationen mit einem ganzzahligen Vielfachen der Lüfterdrehzahl.

### Selektivität der Schwingungsanalyse mittels Laser-Vibrometer:

Es wird mittels des Laserstrahls vorzugsweise stets nur die gerade angepeilte Komponente gemessen, benachbarte Komponenten beeinflussen - anders als bei einer akustischen Geräuschmessung - das Messergebnis nicht. Somit ist eine sehr individuelle Analyse einzelner Komponenten möglich.

### Kombination mit andersartigen Schutzkonzepten

Akustische Messungen werden vorzugsweise mit weiteren Beobachtungstechnologien und Messtechniken zeitlich synchronisiert ausgewertet. Insbesondere die zeitliche Koinzidenz von Besonderheiten in der Messgröße wird vorzugsweise analysiert. Die Treffersicherheit der Interpretation/Analyse des Ereignisses wird somit massiv gesteigert, da die verschiedenartigen Messmethoden auf Störeinflüsse unterschiedlich bzw. gar nicht reagieren. Die Schutzkonzepte erhalten somit eine höhere Betriebssicherheit (Vermeidung von Fehlabschaltungen) und eine verbesserte Fehlererkennung (Vermeidung von Havarie wegen Schutzversagens)

### Spezielle Anwendungen:

### Überwachung eines IGBT Konverters:

Ergänzend zum Schutz des Konverters über seine integrierte Kommunikation und den Back-up Schutz "Infrarotsensoren" werden vorzugsweise nun als drittes noch Mikrofone im Konverterraum installiert, die in geringer Anzahl mit Richtcharakteristik den Raum überwachen.

### Geräuschbildung bei Durchbrennen eines IGBTs und schlagartiger Entladung eines Submodulkondensators in das defekte IGBT Modul:

Der Geräuschverlauf über der Zeit wird vorzugsweise charakterisiert durch die folgenden Ereignisse: Versagen eines IHGBTs mit direkt anschließendem Kurzschluss des Submodulkondensators. Ein sehr hoher Stoßstrom verursacht mechanische Schwingungen des Kondensatorgehäuses sowie der Stromschienen und des IGBT-Gehäuses aufgrund von magnetischen Kräften im Strompfad. Der zeitliche Verlauf von Geräuschen und Peaks im Signalverlauf wird auch akustischer Fingerabdruck genannt. Er ist unterschiedlich für das Schließen eines Bypass-Schalters (normaler Betriebsfall, keine Abschaltung des Konverters erforderlich) und stark abweichend in der zeitlichen Dauer von dem Falle eines Bypass-Schalterversagens mit aus dem Gehäuse austretendem Lichtbogen/Feuer (sofortige Abschaltung des Konverters nötig).

Da nach einem versagenden IGBT- und Submodulfehler die Kommunikation des defekten Submoduls mangels Spannung im Kondensator und somit mangels Spannung in der Ansteuerelektronik ausfällt, ist in der Regel die Lokalisierung eines Einzelfehlers des betroffenen Submoduls einfach möglich.

### Andersartige Fehler, z. B. Erkennung von Kontaktierungsfehlern mit UV Licht und Kurzschließen von kleinen Teilstrecken im Strompfad:

Schwache Kontaktstellen und kleine Entladungen an andersartigen Fehlerstellen werden die Kommunikationsfähigkeit eines Submoduls in der Regel nicht beeinträchtigen. Zusätzlich zur IR-/UV-Erkennung kann hier die akustische Lokalisierung helfen, den Fehler im Konverterraum zu lokalisieren. Dies gilt insbesondere, wenn UV/IR-Melder noch nicht oder in größerer Anzahl gleichzeitig ansprechen.

### Arbeitsprinzipbedingte Fehler:

Wenn ein Sensortyp aufgrund einer Änderung eines Umgebungsparameters in Gruppen gleichzeitig eine Fehlinterpretation liefern, so kann die Erhöhung der Diversität mittels zusätzlicher Auswertung von akustischen Signalen helfen, die Fehlinterpretation zu erkennen und eine Fehlabschaltung des Konverters zu vermeiden (Beispiel: Einschalten der Hallenbeleuchtung wird als Brandflackern fehlinterpretiert oder Einsaugen von Brandgasen aus der Umgebung der HGÜ in die Konverterhalle über die Hallenbelüftung).

Pro Messstelle werden vorzugsweise 2 IR-Melder + 1 Mikrofon vorgesehen und diese in 2-aus-3-Abhängigkeit verschaltet: Die Anlagenabschaltung wird dann ausgelöst, wenn entweder 2 IR-Melder ansprechen oder wenn mindestens 1 IR-Melder und ein Mikrofon ansprechen.

Beispielmatrix für den Ausschluss von Fehl-Abschaltung des Konverters:

| Fehlertyp / Fehl-Ansprechen von Sensoren | Hallenbeleuchtung einschalten | Äußere Feuer, Brandgas | Äußere Knalleffekte | Normales Schlie-ßen des Bypass |
|---|---|---|---|---|
| 1) Submodul GIB Kommunikationsausfall | Nein | Nein | Nein | Ja |
| 1b) Nachbar-Submodul GIB meldet Bypass schließen | Nein | Nein | Nein | Ja |
| 2)IR Sensor | Ja | Nein | Nein | Nein |
| 3)Stör LWL (falls vorh.) | Nein | Nein | Nein | Ja |
| 4)Akustik Sensor5) Brandgas Sensor in Lüftung | (Nein, bewerten, wenn nur ein IR Melder aktiv) Nein | (Nein, bewerten, wenn nur ein Brandgas Melder aktiv) Ja | Ja Nein | (Ja, bewerten, wenn nur ein IR Melder aktiv) Nein |
| Verknüpfte Bewertung: FehlAbschaltung des Konverters? | Nein | Nein | Nein | Nein |

### Differentielle Signalerfassung:

Akustische Signale werden vorzugsweise mit Hilfe einer Vergleichsfunktion zu Signalen von außen fehlersicher gemacht: Wird beispielsweise während eines äußeren Feuerwerks (zum Jahreswechsel) außerhalb und innerhalb der Halle das gleiche Signal (Schallsignale oder Rauchgase) erfasst, so wird dieses nicht als Ereignis im Konverter interpretiert. Eine Anlagenabschaltung wird vorzugsweise durch die nicht-angeregten IR-Melder blockiert.

### A) Lokalisierung einer Fehlerstelle über Laufzeitunterschiede der Signale:

Die Fehlerstelle wird im Konverterraum lokalisiert durch das zeitgleiche Aufzeichnen der verschiedenen Mikrofone im Raum und die Auswertung der Laufzeitunterschiede von Peaks im Signal: Unterschiedliche Signallaufzeiten für den Kurzschluss-Knall des Kondensators sowie die folgenden Peaks im Geräuschverlauf über der Zeit vom Ort des Fehlers bis hin zu den einzelnen Mikrofonen dienen vorzugsweise zur Bestimmung des ungefähren Einbauorts des defekten Submoduls mittels Laufzeitunterschieden.

### B) Lokalisierung einer Fehlerstelle über Amplitudenunterschiede der Signale:

Die Fehlerstelle wird im Konverterraum vorzugsweise lokalisiert durch den Vergleich der Amplituden der Signale, die an den verschiedenen Orten in der Konverterhalle gemessen werden. Je weiter der Fehlerort von dem Installationsort des Mikrofons entfernt ist, desto kleiner ist die Amplitude des Signals. Dieser Effekt wird verstärkt durch die Verwendung von Richtmikrofonen bzw. Stereomikrofonen, die beispielsweise lediglich einen Quadranten des Raums gerichtet erfassen, jedoch Signale, die aus anderen Richtungen einlaufen, stark bedämpfen.

Bei Verwendung von preisgünstigen Mikrofonen bietet sich also eine Installation von Mikrofonen in den folgenden Positionen an:
Für den obigen Fall B): 4 Stk. Mikrofone im Raummittelpunkt, Richtmikrofone mit ca. 100° horizontalem Messbereich
Für den obigen Fall A) jeweils 1 Stk. Mikrofon in den 4 Raumecken,
3a Redundanz: Installation der oben genannten 8 Stk. Mikrofone an doppelt alle an der Raumdecke
3b Alternativ: Installation der unter 1 und 2 genannten Installationspunkte unter der Raumdecke und am Boden der Konverterhalle

### Zusammenspiel von akustischer, optischer und moduleigener Fehlererfassung:

Folgende Matrix kann zur Erkennung von verschiedenen Schadens-Ereignissen ausgewertet werden: Dabei erfolgt vorzugsweise eine automatische "UND-Verknüpfung" von IR-Sensor und Akustik Sensor, sobald nur noch 1 von 2 IR-Sensoren intakt ist.

| Fehlertyp / Ansprechen von Sensoren | IGBT Fehler, Bypass Schalter schließt erfolgreich | IGBT Fehler, Bypass Schalter versagt (für 3 Sek. Gehäuse intakt) | IGBT Fehler, Bypass Schalter versagt (für 10 Sek., Feuer tritt aus) | Kontaktfehler in Konverterhalle | Erhöhte Korona und Teilentladungen |
|---|---|---|---|---|---|
| 1a)Submod ul GIB Kommunikationsausfall | Ja | Ja | Ja | Nein | Nein |
| 1b) Defektes Nachbar-Submodul | Nein | Nein | Nein | Nein | Nein |
| 2) IR Sensor | Nein | Nein | Ja | Ja | Ja |
| 3) Stör LWL (falls vorh.) | Ja (kurz) | Ja (lang) | Ja (lang) | Nein | Nein |
| 4)Akustik Sensor, insbesondere, wenn einer von 2 IR Meldern defekt | Ja (Spektrum 1) | Ja (Spektrum 2) | Ja (Spektrum 3) | Evtl. (Spektrum 4) | Evtl. (Spektrum 5) |
| 5) Brandgas Sensor in | Nein | Nein | Nein | Nein | Nein |

| | | | | | |
|---|---|---|---|---|---|
| Lüftung (zu langsam! ! ! ) | | | | | |
| Verknüpfte Bewertung der Alarme korrekt? | Ja | Ja | Ja | Ja | Ja |

Die akustische, automatisierte Überwachung von Konvertern (aber auch von anderen Anlagenteilen) kann neben dem Erkennen eines Bypass-Schalter Versagens auch zur Erkennung anderer Ereignisse genutzt werden, um eine Analyse zu machen, z. B.:
- Bypass-Thyristor-Versagen (Durchschlag)
- Teilentladungs- und Streamer Erkennung (geräuschvoll)
- Wasser-Leckagen mit größerem Querschnitt, z. B.: geplatztes Rohr, oder
- Kontaktprobleme im Schienensystem (bei Funkenbildung)
- Ausblasen eines Kondensators mit Überdruck, was größere Geräusche verursacht

Mit Hilfe von kurzen Audio-Clips (z. B. 30 Sekunden lange Aufzeichnungen von ungewöhnlichen Geräuschen, getriggert durch besonders hohe Geräuschamplituden /-peaks oder durch besonderen Frequenzgehalt) wird vorzugsweise automatisiert oder manuell (vorzugsweise anfangs manuell durch Experten mit Erfahrung) ausgewertet: Aus der Amplitude der Geräusche und aus dem Frequenzspektrum (aus Fourier-Analyse) wird vorzugsweise erkannt, welches besondere Ereignis sich gerade abspielt oder zum Zeitpunkt von Interesse abgespielt hat.

### Funktionstest und automatische Kalibrierung:

Ein akustischer Impuls wird vorzugsweise mit einem Lautsprecher zentral (in der Mitte des Raumes) im Konverterraum erzeugt. Die verschiedenen Mikrofonaufzeichnungen werden vorzugsweise ausgewertet in Bezug auf zeitlichem Versatz des Impulses und Amplitude.

Weiter wird vorzugsweise mittels des Lautsprechers eine Folge von Einzelfrequenzen in den beobachteten Raum ausgestrahlt. Die Frequenzanalyse der einzelnen Mikrofone wird verglichen, mögliche Abweichungen werden quantifiziert und dokumentiert und/oder abgespeichert. Mittels eines Vergleichs werden vorzugsweise frequenzabhängige Korrekturkurven erstellt und für die Auswertung von Ereignissen bereitgehalten.

### Spezielle Anwendung - Beobachtung eines Drosselraums:

In gleicher Weise, wie der Konverterraum akustisch beobachtet und protokolliert wird, wird auch im Drosselraum eine akustische Überwachung installiert. Je ein Richtmikrofon ist hierbei jeweils direkt auf eine Drossel gerichtet. Die Auswertung betrachtet Abweichungen in der Geräuschamplitude und im Frequenzspektrum der einzelnen Drosseln. Mittels eines Ausgleichsalgorithmus werden zu Beginn des Betriebs die für den Normalbetrieb typischen Abweichungen zwischen den einzelnen Drosseln für verschiedene Arbeitspunkte protokolliert und für spätere mögliche Korrekturrechnungen bereitgehalten. Die Überwachung identifiziert automatisch Abweichungen vom normalen akustischen Fingerabdruck einer Drossel und die Abweichungen werden mit Hilfe eines Vergleichs zwischen den insgesamt beispielsweise 6 Stück installierten Drosseln erkannt und gegebenenfalls gemeldet.

Nach Etablierung der akustischen Technologie kann aufgrund von signifikanter akustischer Anomalie auch eine Anlagenabschaltung initiiert werden, um Drosselbrand oder größere Folgeschäden zu vermeiden.

### Spezielle Anwendung - Beobachtung von Transformatoren:

Das gleiche Betriebsprinzip für Schutz und Erkennung von besonderen Betriebszuständen und Ereignissen wird vorzugsweise auch in der Trafobucht angewendet. Es erfolgt vorzugsweise eine Verknüpfung mit dem bereits heute üblichen Schutz.

Die beschriebene akustische Fehlererkennung stellt eine wertvolle Ergänzung für heutige Schutzkonzepte dar, die zahlreiche Informationen zu Fehlertypen und Position erschließt: Wirtschaftliche Vorteile, deutlich niedrigere Kosten, Verbesserung der Fehlererkennung und Funktionssicherheit der Abschaltfunktion lassen sich erreichen.

Das oben beschriebene Konzept "IR Melder plus akustisches Monitoring" ist bei einem gravierenden Fehler im Konverter mit Brandfolge gleichwertig zum teuren 2-aus-3-IR-Melderkonzept, bietet aber weitere Vorteile:
- Auswertung des Fingerabdrucks des Signals in allen Meldertypen und Mikrofonen ermöglicht eine Zuordnung von Besonderheiten in den Aufzeichnungen zu speziellen Fehlertypen, d. h. eine Unterscheidung von Teilentladungen, Kontaktfehlern, geschlossenen und offenen IGBT-Feuerfällen ist möglich.
- Spezialfall Konverter Monitoring, Bypass-Versager: Die zeitliche Signaldauer und die Signalamplitude gibt zuverlässigen Aufschluss auf den Typ von verschiedenartigen Ereignissen und Fehlern.
- Richtwirkung von Sensoren zur Erkennung der Position der Signalquelle im Raum.
- Selektivität in der Erkennung der Fehlertypen durch Diversität in der ausgewerteten Sensorik.
- Vermeidung von Fehlauslösung durch Verknüpfung von Signalen von verschiedenartigen Sensoren und Auswertungen.
- Fehlauslösung durch äußere Ereignisse wird ausgeschlossen.
- Systematische Speicherung und Archivierung von Ereignissen zur Erstellung einer Referenzdatenbank von Melder- und Mikrofonaufzeichnungen für Normalbetrieb und SonderEreignisse ist möglich.

### Bezugszeichenliste

- 10: elektrische Anlage
- 20: Anlagenkomponente
- 21: Verbindungsleitung
- 22: Anlagensensor
- 30: Überwachungseinrichtung
- 31: akustischer Sensor
- 32: akustischer Sensor
- 33: Auswerteinrichtung
- 34: nichtakustischer Sensor
- 100: Recheneinrichtung
- 110: Speicher

- APM: Auswertprogrammmodul
- S22: Betriebszustandssignal
- S31: akustisches Messsignal
- S32: akustisches Messsignal
- S34: nichtakustisches Messsignal
- W: Warnsignal

## Patentansprüche

1. Elektrische Anlage (10) mit mehreren elektrischen Anlagenkomponenten (20), wobei die elektrischen Anlagenkomponenten (20) Transformatoren, elektrische Umrichter oder Schaltkomponenten sind, die über elektrische Verbindungsleitungen (21) miteinander in Verbindung stehen, wobei den elektrischen Anlagenkomponenten (20) jeweils ein elektrischer Anlagensensor (22) zugeordnet ist, und einer Überwachungseinrichtung (30) zur Überwachung der elektrischen Anlage (10),
wobei
- die Überwachungseinrichtung (30) zumindest einen akustischen Sensor (31, 32) zur Geräuscherfassung der Geräusche der elektrischen Anlage (10) unter Bildung eines akustischen Messsignals (S31, S32) aufweist und
- die Überwachungseinrichtung (30) eine mit dem zumindest einen akustischen Sensor (31, 32) in Verbindung stehende Auswerteinrichtung (33) umfasst, die dazu eingerichtet ist, das akustische Messsignal (S31, S32) auszuwerten und ein Warnsignal (W) zu erzeugen, wenn das akustische Messsignal (S31, S32) auf ein Fehlverhalten der oder zumindest einer der Anlagenkomponenten (20) hinweist, wobei
- die Anlagensensoren (22) dazu eingerichtet sind, jeweils ein den jeweiligen Betriebszustand der ihnen zugeordneten Anlagenkomponente(n) (20) beschreibendes Betriebszustandssignal (S22) zu erzeugen, und
- die Auswerteinrichtung (33) mit den Anlagensensoren (22) in Verbindung steht und dazu ausgestaltet ist, das akustische Messsignal (S31, S32) unter Heranziehung der zur Verfügung stehenden Betriebszustandssignale (S22) auszuwerten und das Warnsignal (W) zu erzeugen, wenn das akustische Messsignal (S31, S32) für die durch die Betriebszustandssignale (S22) beschriebenen Betriebszustände der Anlagenkomponenten (20) auf ein Fehlverhalten einer oder mehrerer der Anlagenkomponenten (20) hinweist, wobei
- die Überwachungseinrichtung (30) einen oder mehrere nichtakustische Sensoren (34), insbesondere Schwingungssensoren wie beispielsweise Laservibrometer oder UV und IR Licht-Sensoren, Wasserstandsmeldesensoren, Drucksensoren aufweist, die nichtakustische Messsignale (S34) erzeugen, und die Auswerteinrichtung (33) dazu ausgebildet ist, anhand des oder der akustischen und des oder der nichtakustischen Messsignale (S31, S32, S34) das Warnsignal (W) zu erzeugen, wenn diese in Kombination auf einen Fehler der Anlage (10) hinweisen, wobei der jeweilige Anlagensensor (22) ein Stromsensor, ein Spannungssensor oder ein Temperatursensor ist, der als Betriebszustandssignal (S22) den Stromfluss durch die oder zumindest eine der Anlagenkomponenten (20), die an den oder an zumindest einer der Anlagenkomponenten (20) anliegende elektrische Spannung oder die Temperatur der oder zumindest einer der Anlagenkomponenten (20) angibt, wobei
- die Überwachungseinrichtung (30) zwei oder mehr akustische Sensoren (31, 32) zur Geräuscherfassung der Geräusche der elektrischen Anlage (10) aufweist und
- die Auswerteinrichtung (33) dazu ausgestaltet ist, die akustischen Messsignale (S31, S32) der Sensoren (31, 32) auszuwerten und ein Warnsignal (W) zu erzeugen, wenn die akustischen Messsignale (S31, S32) insgesamt oder ein oder mehrere der Messsignale (S31, S32) auf ein Fehlverhalten der Anlage (10) hinweisen, und wobei
- die Auswerteinrichtung (33) dazu ausgestaltet ist, die Phasenlage und/oder Laufzeit zumindest zweier der akustischen Messsignale (S31, S32) hinsichtlich einer Phasenlagen- und/oder Laufzeitdifferenz unter Bildung einer Richtungsinformation auszuwerten und die akustischen Messsignale (S31, S32) richtungsselektiv auszuwerten.

2. Elektrische Anlage (10) nach Anspruch 1,
**dadurch gekennzeichnet, dass** die Auswerteinrichtung (33) dazu ausgebildet ist, das oder die akustischen Messsignale (S31, S32) hinsichtlich der jeweiligen Amplitude auszuwerten und das Warnsignal (W) zu erzeugen, wenn die Amplitude oder Amplituden auf ein Fehlverhalten der Anlage (10) hinweisen.

3. Elektrische Anlage (10) nach einem der voranstehenden Ansprüche,
**dadurch gekennzeichnet, dass** die Auswerteinrichtung (33) dazu ausgebildet ist, das oder die akustischen Messsignale (S31, S32) hinsichtlich des Frequenzspektrums auszuwerten und das Warnsignal (W) zu erzeugen, wenn die Frequenzspektren auf ein Fehlverhalten der Anlage (10) hinweisen.

4. Elektrische Anlage (10) nach einem der voranstehenden Ansprüche,
**dadurch gekennzeichnet, dass** die Auswerteinrichtung (33) dazu ausgebildet ist, das oder die akustischen Messsignale (S31, S32) mit abgespeicherten Signalmustern zu vergleichen und das Warnsignal (W) zu erzeugen, wenn aktuelle Messsignale (S31, S32) von abgespeicherten Signalmustern über ein vorgegebenes Maß abweichen.

5. Elektrische Anlage (10) nach einem der voranstehenden Ansprüche,
**dadurch gekennzeichnet, dass** die Auswerteinrichtung (33) dazu ausgebildet ist, anhand von akustischen Messsignalen im fehlerfreien Anlagenzustand durch Anlernen künstliche Intelligenz zu erwerben, anhand derer sie das Warnsignal (W) erzeugen kann, wenn aktuelle Messsignale (S31, S32) über ein vorgegebenes Maß von Messsignalen der fehlerfreien Anlage (10) abweichen.

6. Verfahren zum Überwachen einer elektrischen Anlage (10), die mit mehreren elektrischen Anlagenkomponenten (20) und zumindest einer Überwachungseinrichtung (30) zur Überwachung der elektrischen Anlage (10) ausgestattet ist, wobei die elektrischen Anlagenkomponenten (20) Transformatoren, elektrische Umrichter oder Schaltkomponenten sind, die über elektrische Verbindungsleitungen (21) miteinander in Verbindung stehen, wobei den elektrischen Anlagenkomponenten (20) jeweils ein elektrischer Anlagensensor (22) zugeordnet ist, wobei
- mit zumindest einem akustischen Sensor (31, 32) Geräusche innerhalb der elektrischen Anlage (10) unter Bildung eines akustischen Messsignals (S31, S32) gemessen werden, und
- das akustische Messsignal (S31, S32) ausgewertet und ein Warnsignal (W) erzeugt wird, wenn das akustische Messsignal (S31, S32) auf ein Fehlverhalten der Anlage (10) hinweist, wobei
- die Anlagensensoren (22) jeweils ein den jeweiligen Betriebszustand der ihnen zugeordneten Anlagenkomponente(n) (20) beschreibendes Betriebszustandssignal (S22) erzeugen, und
- die Auswerteinrichtung (33) mit den Anlagensensoren (22) in Verbindung steht und das akustische Messsignal (S31, S32) unter Heranziehung der zur Verfügung stehenden Betriebszustandssignale (S22) auswertet und das Warnsignal (W) erzeugt, wenn das akustische Messsignal (S31, S32) für die durch die Betriebszustandssignale (S22) beschriebenen Betriebszustände der Anlagenkomponenten (20) auf ein Fehlverhalten einer oder mehrerer der Anlagenkomponenten (20) hinweist, wobei der jeweilige Anlagensensor (22) ein Stromsensor, ein Spannungssensor oder ein Temperatursensor ist, der als Betriebszustandssignal (S22) den Stromfluss durch die oder zumindest eine der Anlagenkomponenten (20), die an den oder an zumindest einer der Anlagenkomponenten (20) anliegende elektrische Spannung oder die Temperatur der oder zumindest einer der Anlagenkomponenten (20) angibt, wobei
- die Überwachungseinrichtung (30) zwei oder mehr akustische Sensoren (31, 32) zur Geräuscherfassung der Geräusche der elektrischen Anlage (10) aufweist und
- die Auswerteinrichtung (33) die akustischen Messsignale (S31, S32) der Sensoren (31, 32) auswertet und ein Warnsignal (W) erzeugt, wenn die akustischen Messsignale (S31, S32) insgesamt oder ein oder mehrere der Messsignale (S31, S32) auf ein Fehlverhalten der Anlage (10) hinweisen, und wobei die Auswerteinrichtung (33) die Phasenlage und/oder Laufzeit zumindest zweier der akustischen Messsignale (S31, S32) hinsichtlich einer Phasenlagen- und/oder Laufzeitdifferenz unter Bildung einer Richtungsinformation auszuwerten und die akustischen Messsignale (S31, S32) richtungsselektiv auswertet, wobei die Überwachungseinrichtung (30) einen oder mehrere nichtakustische Sensoren (34), insbesondere Schwingungssensoren wie beispielsweise Laservibrometer oder UV und IR Licht-Sensoren, Wasserstandsmeldesensoren, Drucksensoren aufweist, die nichtakustische Messsignale (S34) erzeugen, und
- die Auswerteinrichtung (33) anhand des oder der akustischen und des oder der nichtakustischen Messsignale (S31, S32, S34) das Warnsignal (W) erzeugt, wenn diese in Kombination auf einen Fehler der Anlage (10) hinweisen.

## Claims

1. Electrical installation (10) comprising a plurality of electrical installation components (20), wherein the electrical installation components (20) are transformers, electrical converters or switching components that are connected to one another via electrical connecting lines (21), wherein an electrical installation sensor (22) is assigned to each of the electrical installation components (20), and a monitoring apparatus (30) for monitoring the electrical installation (10),
wherein
- the monitoring apparatus (30) has at least one acoustic sensor (31, 32) for noise detection of the noise of the electrical installation (10) so as to form an acoustic measurement signal (S31, S32), and
- the monitoring apparatus (30) comprises an evaluation apparatus (33) that is connected to the at least one acoustic sensor (31, 32) and is designed to evaluate the acoustic measurement signal (S31, S32) and to produce a warning signal (W) if the acoustic measurement signal (S31, S32) indicates abnormal behaviour of the, or at least one of the, installation components (20), wherein
- the installation sensors (22) are designed to each produce an operating state signal (S22) describing the respective operating state of the installation component(s) (20) assigned to them, and
- the evaluation apparatus (33) is connected to the installation sensors (22) and is configured to evaluate the acoustic measurement signal (S31, S32) using the operating state signals (S22) available, and to produce the warning signal (W) if the acoustic measurement signal (S31, S32) for the operating states, described by the operating state signals (S22), of the installation components (20) indicates abnormal behaviour of one or more of the installation components (20), wherein
- the monitoring apparatus (30) has one or more non-acoustic sensors (34), in particular vibration sensors such as, for example, laser vibrometers or UV and IR light sensors, water level notification sensors, and pressure sensors, that produce non-acoustic measurement signals (S34), and the evaluation apparatus (33) is designed, on the basis of the acoustic measurement signal or signals and the non-acoustic measurement signal or signals (S31, S32, S34), to produce the warning signal (W) if these, in combination, indicate a fault in the installation (10), wherein the respective installation sensor (22) is a current sensor, a voltage sensor or a temperature sensor that indicates, as the operating state signal (S22), the flow of current through the or at least one of the installation components (20), the voltage present at the or at at least one of the installation components (20), or the temperature of the or at least one of the installation components (20), wherein
- the monitoring apparatus (30) has two or more acoustic sensors (31, 32) for noise detection of the noise of the electrical installation (10), and
- the evaluation apparatus (33) is designed to evaluate the acoustic measurement signals (S31, S32) of the sensors (31, 32) and to produce a warning signal (W) if the acoustic measurement signals (S31, S32) collectively, or one or more of the measurement signals (S31, S32), indicate abnormal behaviour of the installation (10), and wherein
- the evaluation apparatus (33) is configured to evaluate the phase angle and/or propagation time of at least two of the acoustic measurement signals (S31, S32) in terms of a phase angle difference and/or propagation time difference so as to form direction information and to evaluate the acoustic measurement signals (S31, S32) in a directionally selective manner.

2. Electrical installation (10) according to Claim 1, **characterized in that**
the evaluation apparatus (33) is designed to evaluate the acoustic measurement signal or signals (S31, S32) in terms of the respective amplitude and to produce the warning signal (W) if the amplitude or amplitudes indicate abnormal behaviour of the installation (10).

3. Electrical installation (10) according to either of the preceding claims,
**characterized in that**
the evaluation apparatus (33) is designed to evaluate the acoustic measurement signal or signals (S31, S32) in terms of the frequency spectrum and to produce the warning signal (W) if the frequency spectra indicate abnormal behaviour of the installation (10).

4. Electrical installation (10) according to one of the preceding claims,
**characterized in that**
the evaluation apparatus (33) is designed to compare the acoustic measurement signal or signals (S31, S32) with stored signal patterns and to produce the warning signal (W) if present measurement signals (S31, S32) deviate from stored signal patterns beyond a predefined extent.

5. Electrical installation (10) according to one of the preceding claims,
**characterized in that**
the evaluation apparatus (33) is designed to acquire artificial intelligence on the basis of acoustic measurement signals in the fault-free installation state by way of training, on the basis of which artificial intelligence said evaluation apparatus can produce the warning signal (W) if present measurement signals (S31, S32) deviate from measurement signals of the fault-free installation (10) beyond a predefined extent.

6. Method for monitoring an electrical installation (10) that is equipped with a plurality of electrical installation components (20) and at least one monitoring apparatus (30) for monitoring the electrical installation (10), wherein the electrical installation components (20) are transformers, electrical converters or switching components that are connected to one another via electrical connecting lines (21), wherein an electrical installation sensor (22) is assigned to each of the electrical installation components (20),
wherein
- noise within the electrical installation (10) is measured using at least one acoustic sensor (31, 32) so as to form an acoustic measurement signal (S31, S32), and
- the acoustic measurement signal (S31, S32) is evaluated and a warning signal (W) is produced if the acoustic measurement signal (S31, S32) indicates abnormal behaviour of the installation (10), wherein
- the installation sensors (22) each produce an operating state signal (S22) describing the respective operating state of the installation component(s) (20) assigned to them, and
- the evaluation apparatus (33) is connected to the installation sensors (22) and evaluates the acoustic measurement signal (S31, S32) using the operating state signals (S22) available, and produces the warning signal (W) if the acoustic measurement signal (S31, S32) for the operating states, described by the operating state signals (S22), of the installation components (20) indicates abnormal behaviour of one or more of the installation components (20), wherein the respective installation sensor (22) is a current sensor, a voltage sensor or a temperature sensor that indicates, as the operating state signal (S22), the flow of current through the or at least one of the installation components (20), the voltage present at the or at at least one of the installation components (20), or the temperature of the or at least one of the installation components (20), wherein
- the monitoring apparatus (30) has two or more acoustic sensors (31, 32) for noise detection of the noise of the electrical installation (10), and
- the evaluation apparatus (33) evaluates the acoustic measurement signals (S31, S32) of the sensors (31, 32) and produces a warning signal (W) if the acoustic measurement signals (S31, S32) collectively, or one or more of the measurement signals (S31, S32), indicate abnormal behaviour of the installation (10), and wherein the evaluation apparatus (33) evaluates the phase angle and/or propagation time of at least two of the acoustic measurement signals (S31, S32) in terms of a phase angle difference and/or propagation time difference so as to form direction information, and evaluates the acoustic measurement signals (S31, S32) in a directionally selective manner, wherein the monitoring apparatus (30) has one or more non-acoustic sensors (34), in particular vibration sensors such as, for example, laser vibrometers or UV and IR light sensors, water level notification sensors, and pressure sensors, that produce non-acoustic measurement signals (S34), and
- the evaluation apparatus (33) produces, on the basis of the acoustic measurement signal or signals and the non-acoustic measurement signal or signals (S31, S32, S34), the warning signal (W) if these, in combination, indicate a fault in the installation (10).

## Revendications

1. Installation (10) électrique comprenant plusieurs composants (20) électriques d'installation, dans lequel les composants (20) électriques d'installation sont des transformateurs, des convertisseurs électriques ou des composants de coupure, qui sont en liaison entre eux par des lignes (21) électriques de liaison, dans laquelle un capteur (22) électrique d'installation est affecté respectivement aux composants (20) électriques d'installation, et comprenant un dispositif (30) de contrôle pour la contrôle de l'installation (10) électrique,
dans laquelle
- le dispositif (30) de contrôle a au moins un capteur (31, 32) acoustique pour la détection des bruits de l'installation (10) électrique avec formation d'un signal (S31, S32) acoustique de mesure, et
- le dispositif (30) de contrôle comprend, un dispositif (33) d'analyse, qui est en liaison avec le au moins un capteur (31, 32) acoustique et qui est propre à analyser le signal (S31, S32) acoustique de mesure et à produire un signal (W) d'alerte, lorsque le signal (S31, S32) acoustique de mesure indique un comportement défectueux du ou des ou au moins de l'un des composants (20) de l'installation, dans laquelle
- les capteurs (22) de l'installation sont agencés pour produire respectivement un signal (S22) d'état de fonctionnement, décrivant l'état de fonctionnement respectif du ou des composants (20) de l'installation, qui leur sont affectés, et
- le dispositif (33) d'analyse est en liaison avec les capteurs (22) de l'installation et est conformé pour analyser le signal (S31, S32) acoustique de mesure, en tirant parti des signaux (S22) de l'état de fonctionnement disponibles et pour produire le signal (W) d'alerte, lorsque le signal (S31, S32) acoustique de mesure indique, pour les états de fonctionnement décrits par les signaux (S22) d'état de fonctionnement, des composants (20) de l'installation, un comportement défectueux de l'un ou de plusieurs des composants (20) de l'installation, dans laquelle
- le dispositif (30) de contrôle a un ou plusieurs capteurs (34) non acoustique, notamment des capteurs de vibrations, comme, par exemple, un vibromètre laser ou des capteurs de lumière UV ou IR, des capteurs d'indication d'un niveau d'eau, des capteurs de pression, qui produisent des signaux (S34) non acoustique de mesure, et le dispositif (33) d'analyse est constitué pour, à l'aide des signaux (S31, S32) acoustiques de mesure ou du ou des signaux (S34) non acoustique de mesure, produire le signal (W) d'alerte, lorsque ceux-ci indiquent en combinaison un défaut de l'installation (10), dans laquelle
- le capteur (22) respectif de l'installation est un capteur de courant, un capteur de tension ou un capteur de température, qui indique, comme signal (S22) d'état de fonctionnement, le flux de courant passant par le ou par au moins l'un des composants (20) de l'installation, la tension électrique s'appliquant à le ou à au moins l'un des composants (20) de l'installation ou la température du ou d'au moins l'un des composants (20) de l'installation, dans laquelle
- le dispositif (30) de contrôle a deux ou plusieurs capteurs (31, 32) acoustiques de détection du bruit de l'installation (10) électrique,
- le dispositif (33) d'analyse est conformé pour analyser les signaux (S31, S32) acoustiques de mesure des capteurs (31, 32) et pour produire un signal (W) d'alerte, lorsque les signaux (S31, S32) acoustiques dans l'ensemble ou lorsque l'un ou plusieurs des signaux (S31, S32) de mesure indiquent un comportement défectueux de l'installation (10), et dans laquelle
- le dispositif (33) d'analyse est conformé pour analyser la position en phase et/ou le temps de parcours d'au moins deux des signaux (S31, S32) acoustiques de mesure, en ce qui concerne une position en phase et/ou une différence de temps de parcours avec formation d'une information de direction, et pour analyser sélectivement en direction les signaux (S31, S32) acoustiques de mesure.

2. Installation (10) électrique suivant la revendication 1,
**caractérisée en ce que**
le dispositif (33) d'analyse est constitué pour analyser le ou les signaux (S31, S32) acoustique de mesure, en ce qui concerne l'amplitude respective, et pour produire le signal (W) d'alerte, lorsque l'amplitude ou les amplitudes indique un comportement défectueux de l'installation (10).

3. Installation (10) électrique suivant l'une des revendications précédentes,
**caractérisée en ce que**
le dispositif (33) d'analyse est constitué pour analyser le ou les signaux (S31, S32) acoustique de mesure, en ce qui concerne le spectre de fréquence, et pour produire le signal (W) d'alerte, lorsque le spectre de fréquence indique un comportement défectueux de l'installation (10).

4. Installation (10) électrique suivant l'une des revendications précédentes,
**caractérisée en ce que**
le dispositif (33) d'analyse est constitué pour comparer le ou les signaux (S31, S32) acoustique de mesure à des modèles de signaux mis en mémoire et pour produire le signal (W) d'alerte, lorsque des signaux (S31, S32) de mesure en cours s'écartent de plus d'une mesure donnée à l'avance des modèles de signaux mis en mémoire.

5. Installation (10) électrique suivant l'une des revendications précédentes,
**caractérisée en ce que**
le dispositif (33) d'analyse est constitué pour acquérir, à l'aide de signaux acoustique de mesure, dans l'état de fonctionnement sans défaut, par apprentissage de l'intelligence artificielle, à l'aide de laquelle il peut produire le signal (W) d'alerte, lorsque des signaux (S31, S32) de mesure en cours s'écartent au-delà d'une mesure donnée à l'avance de signaux de mesure de l'installation (10) sans défaut.

6. Procédé de contrôle d'une installation (10) électrique, qui est équipée de plusieurs composants (20) électriques d'installation et d'au moins un dispositif (30) de contrôle pour le contrôle de l'installation (10) électrique, dans lequel les composants (20) électriques de l'installation sont des transformateurs, des convertisseurs électriques ou des composants de coupure, qui sont en liaison entre eux par des lignes (21) électriques de liaison, dans lequel respectivement un capteur (22) électrique de l'installation est affecté aux composants (20) électriques de l'installation,
dans lequel
- on mesure, par au moins un capteur (31, 32) acoustique des bruits à l'intérieur de l'installation (10) électrique, avec formation d'un signal (S31, S32) acoustique de mesure, et
- on analyse le signal (S31, S32) acoustique de mesure et on produit un signal (W) d'alerte, lorsque le signal (S31, S32) acoustique de mesure indique un comportement défectueux de l'installation (10), dans lequel
- les capteurs (22) de l'installation produisent un signal (S22) d'état de fonctionnement décrivant respectivement l'état de fonctionnement respectif du ou des composants (20) de l'installation, qui leur sont affectés, et
- le dispositif (33) d'analyse est en liaison avec les capteurs (22) de l'installation et analyse le signal (S31, S32) acoustique de mesure en tirant parti des signaux (S22) d'état de fonctionnement disponibles et produit le signal (W), lorsque le signal (S31, S32) acoustique de mesure indique, pour les états de fonctionnement, décrits par les signaux (S22) d'état de fonctionnement des composants (20) de l'installation, un comportement défectueux d'un ou des plusieurs des composants (20) de l'installation, dans lequel
- le capteur (22) de l'installation est un capteur de courant, un capteur de tension ou un capteur de température, qui indique comme signal (S22) d'état de fonctionnement, le flux de courant passant dans le ou dans au moins l'un des composants (20) de l'installation, la tension électrique s'appliquant à le ou au moins à l'un des composants (20) de l'installation ou la température des ou d'au moins l'un des composants (20) de l'installation, dans lequel
- le dispositif (30) d'analyse a deux ou plusieurs capteurs (31, 32) acoustiques de détection des bruits de l'installation (10) électrique,
- le dispositif (33) analyse les signaux (S31, S32) acoustiques de mesure des capteurs (31, 32) et produit un signal (W), lorsque les signaux (S31, S32) de mesure dans l'ensemble ou un ou plusieurs des signaux (S31, S32) de mesure indiquent un comportement défectueux de l'installation (10), et dans lequel le dispositif (33) d'analyse analyse la position en phase et/ou le temps de parcours d'au moins deux des signaux (S31, S32) acoustiques de mesure, en ce qui concerne une différence de position en phase et/ou le temps de parcours, avec formation d'une information de direction, et analyse les signaux (S31, S32) acoustiques de mesure, d'une manière sélective en direction, dans lequel le dispositif (30) de contrôle a un ou plusieurs capteurs (34) non acoustique, notamment des capteurs de vibration comme, par exemple, des vibromètres laser ou des capteurs de lumière UV et IR, des capteurs de mesure du niveau des capteurs de pression, qui produisent des signaux (S34) de mesure non acoustique, et
- le dispositif (33) d'analyse produit, à l'aide du ou des signaux (S31, S32) acoustique de mesure ou du ou des signaux (S34) de mesure non acoustique, le signal (W) d'alerte, lorsque ceux-ci indiquent en combinaison une défaillance de l'installation (10).
